# EUROPEAN PATENT SPECIFICATION

(11) **EP 2 141 333 B1**
(45) Date of publication and mention of the grant of the patent: **15.05.2013**
(21) Application number: 08740674.0
(22) Date of filing: 18.04.2008
(51) Int. Cl.: F01N 3/24, B01D 53/86, B01D 53/94, B01J 23/63, F01N 3/08, F01N 3/10, F01N 3/20, F01N 3/28, F02D 41/02, F02D 43/00

(54) **EXHAUST GAS PURIFYING APPARATUS**
ABGASREINIGUNGSANLAGE
APPAREIL DE PURIFICATION DE GAZ D'ÉCHAPPEMENT

(30) Priority: 26.04.2007 JP 2007117573
(43) Date of publication of application: 06.01.2010
(73) Proprietor: Honda Motor Co., Ltd., Minato-ku Tokyo 107-8556 (JP)
(72) Inventor: SEKI, Chiaki, Wako-shi Saitama 351-0193 (JP); ENDO, Tetsuo, Wako-shi Saitama 351-0193 (JP); SATO, Naohiro, Wako-shi Saitama 351-0193 (JP); YAMAMOTO, Osami, Wako-shi Saitama 351-0193 (JP)
(74) Representative: Herzog, Markus
(86) International application number: PCT/JP2008/057627
(87) International publication number: WO 2008/136287

(56) References cited:
- EP-A1- 1 662 124
- EP-A1- 1 949 959
- EP-A2- 0 878 609
- WO-A1-2005/103461
- JP-A- 10 002 219
- JP-A- 2000 356 125
- JP-A- 2003 247 418
- JP-A- 2006 305 423

## Description

### TECHNICAL FIELD

The present invention relates to an exhaust gas purifying apparatus that purifies NOx in exhaust gas generated from an internal combustion engine, and in particular relates to an exhaust gas purifying apparatus that can purify NOx over a broad temperature region from a low temperature region to a high temperature region.

### BACKGROUND ART

In recent years, gasoline direct-injection engines and diesel engines that have low carbon dioxide emissions have received attention from the point of view of global warming. However, while carbon dioxide emissions are low, nitrogen oxides (hereinafter referred to as NOx) of a relatively larger amount are emitted from these internal combustion engines. This NOx is a substance responsible for acid rain, oxidase smog and the like, and is thus considered to be an air pollutant. As a result, various studies have been conducted for NOx purification methods.

For example, exhaust gas purifying apparatuses have been disclosed (e.g., refer to Patent Document 1) that use an NOx adsorbent having a property whereby NOx is adsorbed when the air/fuel ratio of the exhaust gas is a lean condition (i.e. when the oxygen concentration in the exhaust gas is high), and the NOx adsorbed is released when the air/fuel ratio of the exhaust gas is a rich condition (i.e. when the oxygen concentration in the exhaust gas is low).

In addition, a nitrogen oxide removal method has been disclosed (e.g., refer to Patent Document 2) in which an upstream catalyst, which is configured with a surface catalyst layer having a catalyst composition made from cerium, for example, and an inner catalyst layer having a catalyst composition made from ceria and rhodium or palladium, is contacted, and then a downstream catalyst, which has platinum, rhodium or palladium and a carrier as the catalyst composition, is contacted. According to this removal method, it has been made possible to catalytically reduce NOx in exhaust gas with good durability and efficiency, and without catalyst degradation, even under the presence of oxygen, sulfur oxides or water.
Patent Document 1: Japanese Patent No. 2600492
Patent Document 2: Japanese Unexamined Patent Application Publication No. 2004-8977

EP 0 878 609 A shows an exhaust gas purifying apparatus that is provided in an exhaust path (4) of an internal combustion engine (1) and purifies exhaust gas emitted from the internal combustion engine (1), the apparatus comprising: a purifying unit (5) that is disposed at an upstream side of the exhaust path (4) and includes a three-way catalyst; and a second purifying unit (7, 9) that is disposed downstream of the first purifying unit (5), wherein the second purifying unit (7, 9) includes a first NOx purifying section (7) that has at least one type of NOx catalyst and a second NOx purifying section (9) that is disposed downstream of the first NOx catalyst with a higher operating temperature than the NOx catalyst; wherein the high operating temperature NOx catalyst (9) includes a catalyst having at least one element selected from the group consisting of Pt, Pd, and Rh supported on an inorganic oxide; wherein the inorganic oxide includes cerium oxide; wherein the high operating temperature NOx catalyst (9) includes an ammonia adsorption component having a function of adsorbing ammonia; and wherein the ammonia adsorption component is a cerium and iron-ion exchanged zeolite.

### DISCLOSURE OF THE INVENTION

### Problems to be Solved by the Invention

However, in the catalysts disclosed in the above-identified Patent Documents 1 and 2, in addition to using an alkali metal, an alkali earth metal, and the like, a noble metal such as platinum is necessary for HC, CO and NOx oxidation under lean conditions and NOx reduction under rich conditions. As a result, there has been a problem in that, since this NOx adsorbent has strong basicity, the activity of the noble metal is easily lowered, and in particular, NOx purification efficiency at low temperatures is decreased. In addition, there has been a problem in that, as a result of strong basicity, the bond with SOx, which is more strongly acidic than NOx, is strong, resulting in a high temperature being necessary for a regeneration process after sulfur poisoning, catalyst regeneration at low temperatures is difficult. These are particularly significant problems in diesel engines that are often operated in a low temperature region of no higher than 300°C, for example.

Therefore, development has been carried out for a low operating temperature NOx catalyst in order to solve the above problems. For example, supposing that a low temperature NOx catalyst has an operating temperature range (temperature range achieving effective functioning as a catalyst) as low as 200°C to 300°C, purification of NOx becomes possible in the low temperature region. However, in the case of a low operating temperature NOx catalyst, efficient functioning as a NOx catalyst cannot be achieved in a high temperature region above the operating temperature range. As a result, a problem arises in that, under a regeneration process mode aimed at removing particulate matter (hereinafter, may be also referred to as PM) and sulfur components, the exhaust gas temperature becomes a high temperature, resulting in NOx purification ratio declining. In the future, while exhaust gas regulations have been becoming increasing stringent, the reduction of emissions during regeneration mode is an important issue that should be solved.

The present invention was made by taking the above such issues into account, and an object thereof is to provide an exhaust gas purifying apparatus that can purify NOx over a broad temperature region from a low temperature region to a high temperature region.

### Means for Solving the Problems

The present inventors have diligently researched to solve the above-mentioned problems. As a result thereof, it was discovered that the above issues could be solved by using at least two NOx catalysts having different operating temperatures in combination, and adopting a configuration in which the NOx catalyst having a higher operating temperature is arranged downstream, thereby arriving at completion of the present invention. More specifically, the present invention provides the below configuration.

The present invention provides an exhaust gas purifying apparatus in accordance with claim 1. According to a first aspect, the exhaust gas purifying apparatus includes: a first purifying unit that is disposed at an upstream side of the exhaust path and includes a three-way catalyst; and a second purifying unit that is disposed downstream of the first purifying unit, in which the second purifying unit includes a first NOx purifying section that has at least one type of NOx catalyst, and a second NOx purifying section that is disposed downstream of the first NOx purifying section and has a high operating temperature NOx catalyst with a higher operating temperature than the NOx catalyst.

According to a second aspect of the present invention, in the exhaust gas purifying apparatus as described in the first aspect, the high operating temperature NOx catalyst includes a catalyst having at least one element selected from the group consisting of Pt, Pd, and Rh supported on an inorganic oxide, and a loading amount of the element is 0.1 g to 10 g per 1 L of catalyst volume.

According to a third aspect of the present invention, in the exhaust gas purifying apparatus as described in the second aspect, the inorganic oxide includes cerium oxide.

According to a fourth aspect of the present invention, in the exhaust gas purifying apparatus as described in the third aspect, a contained amount of the cerium oxide is 1 g to 200 g per 1 L of catalyst volume.

According to a fifth aspect of the present invention, in the exhaust gas purifying apparatus as described in any one of the first to fourth aspects, the high operating temperature NOx catalyst includes an ammonia adsorption component having a function of adsorbing ammonia.

According to a sixth aspect of the present invention, in the exhaust gas purifying apparatus as described in the fifth aspect, the ammonia adsorption component is a cerium and iron-ion exchanged zeolite, and a contained amount of the ammonia adsorption component is 1 g to 100 g per 1 L of catalyst volume.

According to a seventh aspect of the present invention, in the exhaust gas purifying apparatus as described in any one of the first to sixth aspects, the catalyst volume of the high operating temperature NOx catalyst is 0.1 L to 2.0 L.

According to an eighth aspect of the present invention, in the exhaust gas purifying apparatus as described in any one of the first to seventh aspects, the internal combustion engine includes a rich/lean control means.

### Effects of the Invention

According to the present invention, an exhaust gas purifying apparatus can be provided that is capable of broadening the NOx purification temperature from a low temperature region to a high temperature region, and can purify NOx all the way from a low temperature region to a high temperature region.

### BRIEF DESCRIPTION OF THE DRAWINGS

FIG. 1 is a schematic illustration of an exhaust gas purifying apparatus 10 according to the present invention; and
FIG. 2 is a view illustrating the NOx purification ratio of Examples and Comparative Example.

### PREFERRED MODE FOR CARRYING OUT THE INVENTION

Hereinafter, embodiments of the present invention are explained with reference to the drawings.

### Exhaust Gas Purifying Apparatus 10

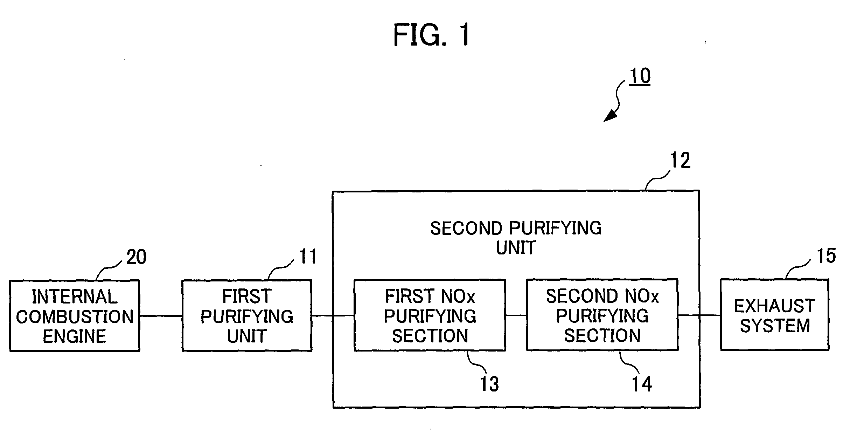

FIG. 1 shows the exhaust gas purifying apparatus 10 according to the present embodiment. As shown in FIG. 1, the exhaust gas purifying apparatus 10 according to the present embodiment is provided in an exhaust path of an internal combustion engine 20. The exhaust gas purifying apparatus 10 includes a first purifying unit 11 that is disposed at an upstream side of the exhaust path, and a second purifying unit 12 that is disposed downstream of the first purifying unit 11.

### Internal Combustion Engine 20

The internal combustion engine 20 is not particularly limited, and the exhaust gas purifying apparatus 10 can be applied to a known conventional internal combustion engine. Preferably, the internal combustion engine includes a known conventional rich/lean control means. For example, it is preferable to utilize a regeneration mode time aimed at removing PM from a DPF and sulfur components from the NOx catalyst, and make the high temperature NOx catalyst, which is described later, function better by increasing a rich area. In particular, since the exhaust gas purifying apparatus 10 according to the present embodiment can efficiently purify NOx in a broad temperature region from a low temperature region to a high temperature region, a diesel engine having a large amount of NOx emissions can be suitably employed as the internal combustion engine 20.

### First Purifying Unit 11

The first purifying unit 11 is provided in an exhaust path of the internal combustion engine 20, and is disposed upstream of a second purifying unit 12, which is described later. The first purifying unit 11 includes a three-way catalyst and has a function of purifying CO, HC and NOx emitted from the internal combustion engine 20. The type of three-way catalyst is not particularly limited and a known conventional three-way catalyst may be used. For example, a material in which noble metals such as Pt/Rh, Pd/Rh, or Pt/Pd/Rh are supported on an inorganic oxide such as alumina or ceria is used by further loading onto a carrier such as cordierite (2MgO.2Al₂O₃.5SiO₂) or a metal.

### Second Purifying unit 12

The second purifying unit 12 is provided in the exhaust path of the internal combustion engine 20, and is disposed downstream of the first purifying unit 11 described above. The second purifying unit 12 is characterized by including a first NOx purifying section 13 having at least one type of NOx catalyst, and a second NOx purifying section 14 disposed downstream of the first NOx purifying section 13 and having a high operating temperature NOx catalyst with a higher operating temperature than the NOx catalyst.

### First NOx Purifying Section 13

The first NOx purifying section 13 includes at least one type of NOx catalyst. That is, it may include one type of NOx catalyst, or it may include two NOx catalysts of two different types or the same type in series. Preferably, two NOx catalysts of two different types or the same type are used in series.

The above-mentioned NOx catalyst (hereinafter, may be also referred to as "low temperature NOx catalyst") is not particularly limited as long as it is one having an operating temperature that is lower than the NOx catalyst used in the second NOx purifying section 14 described below. Preferably, a NOx catalyst is used that is a catalyst of an integrated structure made from a carrier coated with at least 2 catalyst layers that are different, and includes at least a first catalyst layer having a solid acid catalyst with an ammonia adsorptive capacity and a second catalyst layer having a noble metal and a cerium oxide-based material. A NOx catalyst adopting such a two-layer structure can achieve high NOx purification ratio over a broad temperature region by using in combination with such a NOx catalyst with a higher operating temperature as described below, since the operating temperature is as low as 200°C to 300°C. Hereinafter, a low temperature NOx catalyst is explained that adopts such a two-layer structure. It should be noted that "operating temperature" as referred to in the present specification is a temperature at which the NOx catalyst functions effectively and NOx can be purified efficiently.

### First Catalyst Layer

It is preferred that the first catalyst layer uses the above-mentioned low temperature NOx catalyst as an outer most surface layer that is in direct contact with the exhaust gas. In addition, it is preferable not to substantially contain a platinum component, and more preferable not to contain any noble metal component.

The first catalyst layer includes a solid acid catalyst having an ammonia adsorptive capacity. It is preferable for a zeolite-based catalyst to be used as the solid acid catalyst. In addition, it is preferable to add iron element to the zeolite-based catalyst, and more preferable to add cerium element thereto.

Although the reason is not exactly known for the purification efficiency of the exhaust gas, particularly the NOx purification efficiency, being improved by adding iron element or cerium element to a zeolite-based catalyst, adsorption of NOx and reducing components takes place at the iron element, while adsorption of NOx takes place at the cerium element by an oxygen storage/release capability, and further, it can be expected that catalyst poisoning by reducing components is suppressed by the oxygen storage/release capability. By using both components in combination in this way, it is believed that a more superior effect as a catalyst is exhibited by the functions of these acting synergistically.

### Second Catalyst Layer

A noble metal such as platinum and a cerium oxide-based material are added to the second catalyst layer. This is to improve the NOx purification ability by the synergistic effect of the cerium oxide-based material and a noble metal such as platinum. Although the reason is not exactly known for improving the NOx purification efficiency in this way, the poisoning of platinum by reducing components is prevented, and thus the NOx adsorption action is considered to be one cause thereof.

The second catalyst layer includes as a catalytically active species a noble metal and a cerium oxide-based material, and preferably a cerium oxide-based material supporting a noble metal and a zirconium oxide based material supporting a noble metal. Although platinum should be included as an essential component, and gold, palladium, or rhodium can be used as required, it is preferable to use platinum as a main component due to having high activity.

Although the reason is not exactly known for purification of NOx in exhaust gas being promoted by using platinum, NO, which accounts for a large portion within the exhaust gas, is oxidized to NO₂ by platinum, and it is believed that one cause may be a reaction with reducing components that is promoted by this NO₂ being adsorbed on the cerium component of the catalyst used in the present invention.

The noble metal of the catalytically active species is used by loading onto the cerium oxide-based material and/or a heat resistant inorganic oxide other than the above-mentioned cerium oxide-based material (also referred to as simply a heat resistant inorganic oxide). Regarding loading of the noble metal, although it can also be loaded entirely on the cerium oxide-based material and/or heat resistant inorganic oxide that configure the catalyst layer, it may also be loaded on a specified inorganic oxide. The specified inorganic oxide preferably has a high specific surface area value and includes a cerium oxide-based material that is superior in heat resistance, and such a cerium oxide-based material preferably has incorporated a small amount of a rare-earth element such as lanthanum (La) and praseodymium (Pr) in crystals for improved heat resistance. In addition, γ-alumina is preferable as another heat resistant inorganic oxide.

### Layer Formation of First Catalyst Layer and Second Catalyst Layer

It is preferable for the second catalyst layer and the first catalyst layer to be sequentially layered on the carrier, and to be configured such that the first catalyst layer is the topmost layer. In addition, it is preferable for the second catalyst layer of the lower layer to be configured so that the noble metal content decreases gradually or step-wise from a side of the first catalyst layer to a carrier side. The lower layer is not necessarily always one layer, meaning that a multi-layer configuration may be made so that the noble metal content decreases gradually or step-wise.

### Manufacturing Method

A low temperature NOx catalyst adopting the above two-layer structure is manufactured by a known conventional slurry method. More specifically, each slurry is produced by mixing each constituent material with an aqueous medium using a ball mill so as to make the desired component amounts in each catalyst layer. The above-mentioned NOx catalyst is manufactured by coating a slurry thus produced onto a carrier using a wash coating method, and then drying and firing at predetermined conditions.

### Second NOx Purifying Section 14

The second NOx purifying section 14 is disposed downstream of the above-mentioned first NOx purifying section 13. The second NOx purifying section 14 includes a NOx catalyst (hereinafter also referred to as a high temperature NOx catalyst) with an operating temperature higher than the NOx catalyst used in the above-mentioned first NOx purifying section 13.

### High Temperature NOx Catalyst

The high temperature NOx catalyst used in the second NOx purifying section 14 is not particularly limited as long as it has an operating temperature that is higher than the NOx catalyst used in the above-mentioned first NOx purifying section 13. Preferably, a material is used that includes a catalyst formed by supporting at least one element selected from the group consisting of Pt, Pd, and Rh on an inorganic oxide. It is possible to provide an exhaust gas purifying apparatus capable of purifying NOx over a broad temperature region from a low temperature region to a high temperature region by using such a catalyst in which these elements are supported on an inorganic oxide. In particular, NOx can be more efficiently purified even under the high temperatures of a regeneration process mode aimed at PM and sulfur component removal.

The loading amount of each of the above elements is preferably 0.1 g to 10 g per 1 L of catalyst volume. In a case where the loading amount of these elements is below 0.1 g, there may be too few active sites of the noble metal and a purification reaction during reduction will be difficult to start, whereas in a case where it exceeds 10 g, oxygen release from the OSC material will occur actively even from a low temperature, and the NOx purification efficiency by reacting a reducing agent with oxygen will decrease. More preferably, it is 1 g to 3 g.

It is preferable for cerium oxide to be included in the above-mentioned inorganic oxide. The amount of the cerium oxide contained is preferably 1 g to 200 g per 1 L of catalyst volume. In a case where the contained amount of cerium oxide is below 1 g, the NOx adsorption amount will become small, whereby the exhaust gas purification function of the present invention will not be able to be exhibited. In a case of exceeding 200 g, since the amount of oxygen stored and released will become large, the amount of reducing agent (CO and HC) necessary during rich conditions will become large, thereby causing fuel efficiency to decline. More preferably, it is 20 g to 100 g.

The above-mentioned high temperature NOx catalyst preferably includes an ammonia adsorption component having a function of adsorbing ammonia. A cerium and iron-ion exchanged zeolite (aluminosilicate) is preferable for the ammonia adsorption component, and the contained amount thereof is preferably 1 g to 100 g per 1 L of catalyst volume. In a case where the contained amount of the ammonia adsorption component in the NOx catalyst is below 1 g, the ammonia adsorption capacity will be too small and no effect can be exhibited, whereas in a case of exceeding 100 g, an increase in heat mass and pressure drop will result. More preferably, it is 10 g to 50 g.

It should be noted that the catalyst volume of the above-mentioned high temperature NOx catalyst is preferably 0.1 L to 2.0 L. In a case where the catalyst volume is below 0.1 L, the exhaust gas purification amount during high temperatures decreases, whereas in a case of exceeding 2.0 L, a rise in cost and pressure drop will result. More preferably, it is 0.5 L to 1.5 L.

It should be noted that the manufacturing method of the above-mentioned high temperature NOx catalyst is not particularly limited, and a known conventional slurry method may be adopted. More specifically, it is similar to the manufacturing method of the above-mentioned low temperature NOx catalyst.

### Operation

Operation of an exhaust gas purifying apparatus 10 according to the present embodiment will be explained. First, exhaust gas emitted by the internal combustion engine 20 follows the exhaust path and is introduced into the first purifying unit 11. The exhaust gas thus introduced undergoes purification of CO, HC and NOx by way of the operation of the three-way catalyst in the first purifying unit 11. NOx and the like that could not be purified are introduced into the second purifying unit 12. Then, purification of NOx efficiently takes place by sequentially guiding to the first NOx purifying section 13 having the low temperature NOx catalyst and the second NOx purifying section 14 having the high temperature NOx catalyst. More specifically, when the exhaust gas temperature is in a low temperature condition, purification of NOx takes place mainly in the first NOx purifying section 13.

Here, operation under low temperature conditions is explained in detail. First, when the air/fuel ratio of the exhaust gas is in a lean condition (normal driving condition for a diesel engine), the NOx in the exhaust gas passes through the upper layer (first catalyst layer), reaches the lower layer (second catalyst layer), and the NOx is oxidized (e.g., from NO to NO₂) by the noble metal (herein Pt), while this NO₂ is temporarily stored on the lower layer (any second catalyst layer) once adsorbed. At this time, Pt functions as an NO oxidation catalyst and CeO₂ or Ce-Pr-La-Ox function as a NOx adsorbent. Then, when the air/fuel ratio of the exhaust gas is made a rich condition, NOx adsorbed to the lower layer under lean conditions is converted to ammonia (chemical formula 2) by way of hydrogen generated in the water-gas shift reaction (chemical formula 1) described below, and this ammonia travels to the upper layer and is stored again by being adsorbed to a solid acid. At this time, Pt/Zr-Nd-Ox and Pt/CeO₂ function as a water-gas shift catalyst, Pt functions as an NH₃ generation catalyst, and Fe and Ce-ion exchanged β-zeolite functions as an NH₃ adsorbent.

CO+H₂O→H₂+CO₂ (chemical formula 1)

NOx+H₂→NH₃ (chemical formula 2)

Then, when the air/fuel ratio of the exhaust gas is made a lean condition again, the ammonia stored again on the upper layer and the NOx contained in the exhaust gas react by way of the ammonia selective catalytic reduction process (NH₃-SCR) to convert to nitrogen (chemical formula 3), and the nitrogen can be released from the surface of the upper catalyst. At this time, the Fe and Ce-ion exchanged β-zeolite functions as an NH₃-SCR catalyst.

NOx+NH₃+O₂→N₂+H₂O (chemical formula 3)

In this way, a sequence of a cycle, which is defined as temporary storage of NOx on the lower layer, conversion to ammonia, storing again of ammonia on the upper layer, and reduction to nitrogen at the upper layer and release, takes place more efficiently, and thus NOx is purified with better efficiency, even in a low temperature region.

Therefore, when the exhaust gas temperature is in a high temperature condition, purification of NOx takes place mainly in the second NOx purifying section 14. Exhaust gas that has been sufficiently purified is ultimately emitted from the exhaust system 15.

### EXAMPLES

Hereinafter, the present invention is explained based on Examples; however, the present invention is not to be limited to these Examples.

### Example 1

### Manufacture of High Temperature NOx Catalyst

The high temperature NOx catalyst was produced using a known conventional slurry method. More specifically, each slurry was produced by mixing each constituent material together with an aqueous medium using a ball mill so as to make the component amounts shown in Table 1. The high temperature NOx catalyst was manufactured by coating the slurry thus produced onto a carrier indicated below using a wash coating method, and then drying and firing at the conditions indicated below.

### Carrier

Size: 25.4 ϕ x 30 mm
Wall thickness: 4.3 mil
Number of cells: 400
Material: cordierite
Shape: flow-through honeycomb structure

### Drying and Firing Conditions

Drying temperature: 120°C (in air)
Drying time: 1 hour
Firing apparatus: electric oven
Firing temperature: 450°C
Firing time: 30 minutes

### Manufacturing of Low Temperature NOx Catalyst

The low temperature NOx catalyst of a two-layer structure was produced using a known conventional slurry method. More specifically, the low temperature NOx catalyst was manufactured similarly to the above-mentioned high temperature NOx catalyst so as to make the component amounts shown in Table 1. However, a low temperature NOx catalyst of 30 mm length and the high temperature NOx catalyst of 60 mm length were manufactured using carriers of 30 mm length and 60 mm length, respectively.

A 30 mm low temperature NOx catalyst and 30 mm high temperature NOx catalyst obtained in the above-mentioned way were arranged in series to make Example 1A, which was subjected to measurement as described later. In addition, a 60 mm low temperature NOx catalyst and 30 mm high temperature NOx catalyst obtained in the above-mentioned way were arranged in series to make Example 1B, which was subjected to measurement as described later.

### Example 2

### Manufacture of High Temperature NOx Catalyst

A high temperature NOx catalyst that differs from Example 1 was produced using a known conventional slurry method. More specifically, it was manufactured similarly to the above-mentioned high temperature NOx catalyst of Example 1 so as to make the component amounts shown in Table 1.

### Manufacture of Low Temperature NOx Catalyst

A low temperature NOx catalyst of 30 mm length and low temperature NOx catalyst of 60 mm length were manufactured similarly to Example 1.

A 30 mm low temperature NOx catalyst and 30 mm high temperature NOx catalyst obtained in the above-mentioned way were arranged in series to make Example 2A, which was subjected to measurement as described later. In addition, a 60 mm low temperature NOx catalyst and 30 mm high temperature NOx catalyst obtained in the above-mentioned way were arranged in series to make Example 2B, which was subjected to measurement as described later.

### Comparative Example

### Manufacture of Low Temperature NOx Catalyst

A low temperature NOx catalyst of 60 mm length was manufactured similarly to Examples 1 and 2, and subjected to measurement as described later.

**Table 1**

| Component | High Temperature NOx Catalyst of Example 1 [g/L] | High Temperature NOx Catalyst of Example 2 [g/L] | Low Temperature NOx Catalyst of Exam ples and Comparative Example [g/L] |
|---|---|---|---|
| Pt | 1.8 | 0.2 | lower layer: 4.5 |
| Rh | - | 1.3 | - |
| Pd | 2.1 | 0.2 | - |
| CeO₂ | 50 | 50 | lower layer:60 |
| Fe and Ce-ion Exchanged β-zeolite | 60 | 60 | upper layer: 75 |
| Al₂O₃ | 60 | 60 | upper layer: 7 lower layer: 30 |
| Binder | 5 | 5 | upper layer: 8 |
| Ce-Pr-La-Ox | - | - | lower layer: 60 |
| Zr-Nd-Ox | - | - | lower layer: 20 |

### Measurement

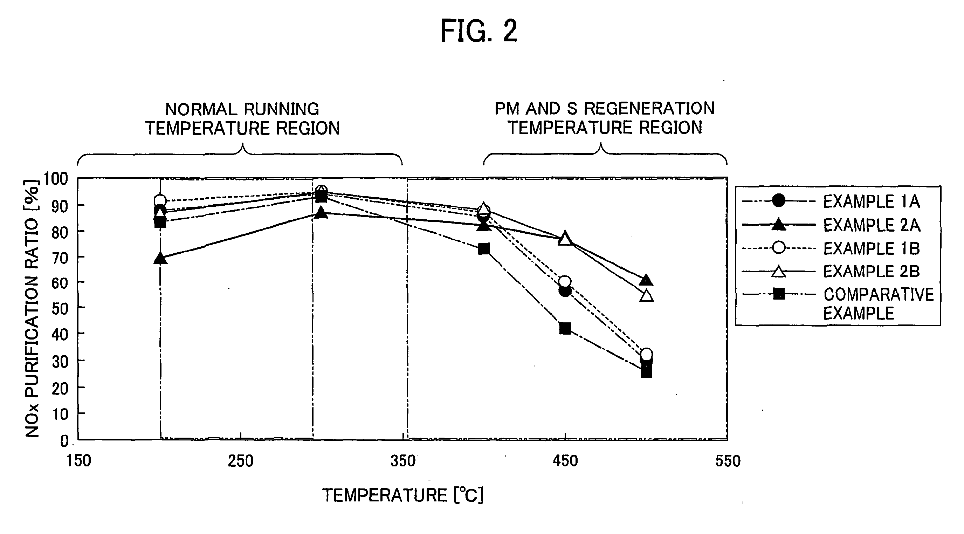

Measurement was performed under the measurement conditions described below, whereby evaluation was performed for the NOx purification efficiency of the above-mentioned Examples and Comparative Example. The evaluation results are shown in FIG 2. The horizontal axis of FIG. 2 is exhaust gas temperature and the vertical axis represents NOx purification ratio (%).

### Measurement Conditions

Exhaust gas temperature: 5 points total of 200°C, 300°C, 400°C, 450°C, and 500°C
Model gas: refer to Table 2 below
Measurement time: 10 cycles (10 minutes total) measured, with lean/rich = 50 sec/10 sec as 1 cycle
Space velocity (SV): 50,000 h⁻¹

**Table 2**

| Model Gas Composition | Lean (50 sec) | Rich (10 sec) |
|---|---|---|
| O₂ | 6% | 0% |
| CO₂ | 7% | 7% |
| C₃H₆ | 200 ppmC | 2000 ppmC |
| CO | 0% | 1% |
| NO | 60 ppmC | 60 ppmC |
| N₂ | balance | balance |
| H₂O | 7% | 7% |

As shown in FIG. 2, the NOx purification ratio decreases in a high temperature region (PM and S regeneration temperature region) for the Comparative Example, from which it is understood to be deactivating. In addition to the NOx adsorptive capacity decreasing, the cause for this is believed to be the oxygen release from the OSC material (oxygen storage component, more specifically CeO₂) becoming active even at low temperatures because of the noble metal amount being large, leading to reacting with reducing agents.

In contrast, it is understood that, as well as the low temperature region (normal running temperature region), the present Examples show a high NOx purification ratio even in the high temperature region. This is believed to be because a temperature range in which the oxygen storage ability of the OSC material is exhibited shifts to a higher range (oxygen release is suppressed) by reducing the noble metal amount, resulting in the oxygen storage/release temperature of the OSC material during rich conditions becoming higher, and since the oxidation reaction of oxygen released from the OSC material with carbon monoxide and hydrocarbons increases in temperature, and the water-gas shift reaction of the carbon monoxide, and hydrocarbons with water, which is necessary for ammonia generation is more likely to occur even in the high temperature region (refer to the above chemical formula 1). In addition, a cause is believed to be the oxygen release amount also being suppressed by reducing the amount of OSC material.

Furthermore, a material having a large amount of Pt generally has a tendency to easily decompose ammonia. As a result, in a case where the Pt amount is large as in the Comparative Example, although NOx can be purified since ammonia can be stored on the zeolite as long as under a low temperature region, it cannot be stored under a high temperature region, which is presumed to result in decomposition progressing earlier, leading to the NOx purification ratio decreasing. To the contrary, in a case where the Pt amount is low as in the present Examples, decomposition does not significantly progress, which is presumed to result in the decomposition temperature shifting to the high temperature side, leading to a high NOx purification ratio being expressed.

## Claims

1. An exhaust gas purifying apparatus that is provided in an exhaust path of an internal combustion engine (20) and purifies exhaust gas emitted from the internal combustion engine, the apparatus (10) comprising:
a first purifying unit (11) that is disposed at an upstream side of the exhaust path and includes a three-way catalyst; and
a second purifying unit (12) that is disposed downstream of the first purifying unit,
wherein the second purifying unit (12) includes a first NOx purifying section (13) that has at least one type of NOx catalyst, and a second NOx purifying section (14) that is disposed downstream of the first NOx purifying section and has a high operating temperature NOx catalyst with a higher operating temperature than the NOx catalyst of the first NOx purifying section (13),
wherein the high operating temperature NOx catalyst includes a catalyst having at least one element selected from the group consisting of Pt, Pd, and Rh supported on an inorganic oxide,
wherein a supported amount of the element is 1 g to 3 g per 1 L of catalyst volume,
wherein the inorganic oxide includes cerium oxide,
wherein a contained amount of the cerium oxide is 20 g to 100 g per 1 L of catalyst volume,
wherein the high operating temperature NOx catalyst includes an ammonia adsorption component having a function of adsorbing ammonia,
wherein the ammonia adsorption component is a cerium-ion and iron-ion exchanged zeolite, and
wherein a contained amount of the ammonia adsorption component is 1 g to 100 g per 1 L of catalyst volume.

2. The exhaust gas purifying apparatus according to claims 1,
wherein the NOx catalyst of the first NOx purifying section (13) has an operating temperature that is 200° to 300°.

3. The exhaust gas purifying apparatus according to claim 1 or 2, wherein the internal combustion engine (10) includes a rich/lean control means.

## Patentansprüche

1. Abgasreinigungsvorrichtung, die in einem Auslassweg eines Verbrennungsmotors (20) vorgesehen ist und von dem Verbrennungsmotor abgegebenes Abgas reinigt, wobei die Vorrichtung (10) umfasst:
eine erste Reinigungseinheit (11), die an einer stromaufwärtigen Seite des Auslasswegs angeordnet ist und einen Dreiwegekatalysator enthält; und
eine zweite Reinigungseinheit (12), die stromab der ersten Reinigungseinheit angeordnet ist,
worin die zweite Reinigungseinheit (12) einen ersten NOx Reinigungsabschnitt (13), der zumindest einen Typ von NOx Katalysator aufweist, und einen zweiten NOx Reinigungsabschnitt (14), der stromab des ersten NOx Reinigungsabschnitts angeordnet ist und einen Hochbetriebstemperatur-NOx Katalysator mit einer höheren Betriebstemperatur als der NOx Katalysator des ersten NOx Reinigungsabschnitts (13) enthält, worin der Hochbetriebstemperatur-NOx Katalysator einen Katalysator enthält, der zumindest ein Element aufweist, das aus der Gruppe ausgewählt ist, die aus Pt, Pd und Rh besteht, getragen auf anorganischem Oxid,
worin die Tragmenge des Elements 1 g bis 3 g pro 1 L Katalysatorvolumen beträgt,
worin das anorganische Oxid Ceriumoxid enthält,
worin die enthaltene Menge des Ceriumoxids 20 g bis 100 g pro 1 L Katalysatorvolumen beträgt,
worin der Hochbetriebstemperatur-NOx Katalysator eine Ammoniakadsorptionskomponente mit einer Funktion zum Adsorbieren von Ammoniak enthält,
worin die Ammoniakadsorptionskomponente ein Cerium-Ion und Eisen-Ion ausgetauschtes Zeolit ist, und
worin die enthaltene Menge der Ammoniakadsorptionskomponente 1 g bis 100 g pro 1 L Katalysatorvolumen beträgt.

2. Die Abgasreinigungsvorrichtung nach Anspruch 1, worin der NOx Katalysator des ersten NOx Reinigungsabschnitts (13) eine Betriebstemperatur hat, die 200° bis 300° beträgt.

3. Die Abgasreinigungsvorrichtung nach Anspruch 1 oder 2, worin der Verbrennungsmotor (10) ein Fett-/Magersteuerungsmittel enthält.

## Revendications

1. Appareil de purification de gaz d'échappement qui est prévu dans un chemin d'échappement d'un moteur à combustion interne (20) et qui purifie les gaz d'échappement émis par le moteur à combustion interne, l'appareil (10) comprenant:
une première unité de purification (11) qui est disposée à un côté amont du chemin d'échappement et qui comprend un catalyseur à trois voies; et
une deuxième unité de purification (12) qui est disposée en aval de la première unité de purification,
dans lequel la deuxième unité de purification (12) comprend une première section de purification de NOx (13) qui comprend au moins un type de catalyseur de NOx, et une deuxième section de purification de NOx (14) qui est disposée en aval de la première section de purification de NOx et qui comprend un catalyseur de NOx à température opérationnelle élevée dont la température opérationnelle est supérieure à celle du catalyseur de NOx de la première section de purification de NOx (13),
dans lequel le catalyseur de NOx à température opérationnelle élevée comprend un catalyseur comprenant au moins un élément sélectionné dans le groupe comprenant le Pt, le Pd et le Rh supporté sur un oxyde inorganique,
dans lequel une quantité supportée de l'élément est comprise entre 1 gramme et 3 grammes pour 1 litre de volume de catalyseur,
dans lequel l'oxyde inorganique comprend de l'oxyde de cérium,
dans lequel une quantité contenue de l'oxyde de cérium est comprise entre 20 grammes et 100 grammes pour 1 litre de volume de catalyseur,
dans lequel le catalyseur de NOx à température opérationnelle élevée comprend un composant d'adsorption de l'ammoniac dont la fonction consiste à adsorber l'ammoniac,
dans lequel le composant d'adsorption de l'ammoniac est une zéolite à échange d'ions cérium et d'ions fer, et
dans lequel une quantité contenue du composant d'adsorption de l'ammoniac est comprise entre 1 gramme et 100 grammes pour 1 litre de volume de catalyseur.

2. Appareil de purification de gaz d'échappement selon la revendication 1, dans lequel le catalyseur de NOx de la première section de purification de NOx (13) présente une température opérationnelle qui est comprise entre 200°C et 300°C.

3. Appareil de purification de gaz d'échappement selon la revendication 1 ou 2, dans lequel le moteur à combustion interne (10) comprend des moyens de commande de régime riche/pauvre.
